# EUROPÄISCHE PATENTANMELDUNG

(11) **EP 2 196 800 A2**
(43) Veröffentlichungstag der Anmeldung: **16.06.2010**
(21) Anmeldenummer: 09015405.5
(22) Anmeldetag: 14.12.2009
(51) Int. Cl.: G01N 29/24, G01N 29/26

(54) **Verfahren und Vorrichtung zur Prüfung eines elektrisch leitfähigen Körpers mittels Ultraschall**

(30) Priorität: 15.12.2008 DE 102008061849
(71) Anmelder: VDEh-Betriebsforschungsinstitut GmbH, 40042 Düsseldorf (DE)
(72) Erfinder: Oberhoff, Dietmar, 42799 Leichlingen (DE); Flohr, Guido, 50354 Hürth (DE); Coen, Günther, 42549 Velbert (DE); Woeste, Werner, 40883 Ratingen (DE)
(74) Vertreter: Tilmann, Max Wilhelm

(57) **Zusammenfassung**

Verfahren zur Prüfung eines elektrisch leitfähigen Körpers, bei dem ein EMAT eingesetzt wird, der eine erste Erzeugerwicklung und mindestens eine zweite Erzeugerwicklung aufweist, wobei die zweite Erzeugerwicklung in einer Prüfrichtung hinter der ersten Erzeugerwicklung angeordnet ist, bei dem
- eine Frequenz und eine Wellenlänge einer zu erzeugenden Ultraschallwelle festgelegt werden, mit der der Körper geprüft werden soll,
- durch Anlegen einer Wechselspannung an die erste Erzeugerwicklung eine sich in die Prüfrichtung ausbreitende Ultraschallwelle erzeugt wird und
- an die zweite Erzeugerwicklung eine Wechselspannung angelegt wird, wenn im Hinblick auf die Ausbreitung der durch die erste Erzeugerwicklung erzeugten Ultraschallwelle die durch das Anlegen einer Wechselspannung an die zweite Erzeugerwicklung hervorgerufene Materialbewegung des Körpers die Ausbreitung einer Ultraschallwelle mit der festgelegten Frequenz und der festgelegten Wellenlänge konstruktiv verstärkt.

## Beschreibung

Die Erfindung betrifft ein Verfahren und eine Vorrichtung zur Prüfung eines elektrisch leitfähigen Körpers.

Aus DE 41 33 648 A1 ist ein elektromagnetisches Ultraschallprüfsystem zum koppelmittelfreien Senden und Empfangen von Ultraschallwellen bei der Werkstoffprüfung von metallischen Rundmaterialien, bzw. Profilen bekannt. Bei diesem Ultraschallprüfsystem wird die Wellenlänge des Ultraschallsignals durch die Wandlergeometrie vorgegeben, während die Signalfrequenz frei einstellbar ist, um verschiedene Stabwellenmoden anregen zu können.

Ferner ist es aus der Praxis grundsätzlich bekannt, zur zerstörungsfreien Prüfung von elektrisch leitfähigen Körpern elektromagnetische Ultraschallwandler (EMUS-Wandler oder unter Verwendung der englischen Abkürzung EMATs (electromagnetic acoustic transducers)) einzusetzen. EMATs erzeugen Ultraschallwellen in elektrisch leitendem Material. Dabei wird die Lorentz-Kraft oder der magnetostriktive Effekt oder auch eine Kombination dieser beiden Effekte eingesetzt. Bei beiden Phänomenen wird auf das Atom-Gitter des zu prüfenden Körpers eingewirkt, so dass eine akustische Welle direkt im zu prüfenden Körper anstatt im Wandler erzeugt wird, wie es der Fall bei piezoelektrischen Wandlern ist. Detaillierte Ausführungen zu dem Erzeugen von Ultraschallwellen mittels EMATs finden sich bei Josef und Herbert Krautkrämer, "Werkstoffprüfung mit Ultraschall", Springer, Berlin; 5. Auflage, Februar 1998.

Vor diesem Hintergrund liegt der Erfindung die Aufgabe zugrunde, ein Verfahren und eine Vorrichtung zur Prüfung eines elektrisch leitfähigen Körpers vorzuschlagen, die zumindest einen Nachteil der aus dem Stand der Technik bekannten Verfahren und Vorrichtungen nicht aufweisen. Insbesondere soll ein Verfahren und eine Vorrichtung zur Prüfung eines elektrisch leitfähigen Körpers, insbesondere eines stabförmigen Körpers vorgeschlagen werden, bei dem Ultraschallwellen erzeugt werden, die sich nur mit geringer Dispersion in dem zu prüfenden Körper ausbreiten.

Diese Aufgabe wird durch das Verfahren und die Vorrichtung der nebengeordneten Ansprüche gelöst. Bevorzugte Ausführungsformen sind in Unteransprüchen und dem hiernach folgendem Beschreibungstext wiedergegeben.

Die Erfindung geht von dem Grundgedanken aus, dass eine Prüfung eines elektrisch leitfähigen Körpers mit einem EMAT besonders gut durchgeführt werden kann, wenn der EMAT als laufzeitgesteuerter (phased array) Gruppenstrahler und/oder laufzeitgesteuerter Gruppenempfänger betrieben wird. Insbesondere geht die Erfindung von dem Grundgedanken aus, dass mit einem so betriebenen EMAT eine ein- oder zweidimensionale geführte Welle in einem elektrisch leitfähigen Körper erzeugt werden kann, bzw. mittels eines so betriebenen EMAT eine ein- oder zweidimensionale geführte Welle in dem elektrisch leitfähigen Körper erfasst werden kann. Ferner bietet der Einsatz eines EMAT als laufzeitgesteuerter Gruppenstrahler den Vorteil, die Ausbreitung der Ultraschallwellen in eine Richtung gezielter vorzunehmen. Während bei der Erzeugung von Ultraschallwellen mit einem EMAT mit einer einzigen Erzeugerwicklung in einer sogenannten Hauptkeule und weiteren Nebenkeulen erfolgt, erfolgt bei dem laufzeitgesteuerten Gruppenstrahler eine konstruktive Verstärkung der Welle nur in Richtung der Hauptkeule. Eine Ausbreitung in Richtung der Nebenkeulen wird im wesentlichen unterdrückt.

Bei dem erfindungsgemäßen Verfahren und der erfindungsgemäßen Vorrichtung zur Prüfung eines elektrisch leitfähigen Körpers kann die Frequenz und die Wellenlänge der erzeugten Ultraschallwelle durch die Ansteuerung der mindestens zwei Erzeugerwicklungen eingestellt werden. Das erfindungsgemäße Verfahren und der Aufbau der erfindungsgemäßen Vorrichtung erlauben es, die Frequenz und die Wellenlänge der zu erzeugenden Ultraschallwelle einzustellen, während bei Vorrichtungen, wie aus der DE 41 33 648 A1 bekannt, nur die Frequenz einstellbar ist, während die Wellenlänge der erzeugten Ultraschallwelle durch die Wandlergeometrie vorgegeben ist. Hierzu kann erfindungsgemäß ein laufzeitgesteuertes Gruppenstrahlersystem zum Senden, bzw. Empfangen eingesetzt werden.

Ein erfindungsgemäßes Verfahren zur Prüfung eines elektrisch leitfähigen Körpers, bei dem ein EMAT eingesetzt wird, der eine erste Erzeugerwicklung und mindestens eine zweite Erzeugerwicklung aufweist, wobei die zweite und - soweit vorhanden - jede weitere Erzeugerwicklung in einer Prüfrichtung hinter der ersten Erzeugerwicklung angeordnet ist, sieht vor, dass
- eine Frequenz und eine Wellenlänge einer zu erzeugenden Ultraschallwelle festgelegt werden, mit der der Körper geprüft werden soll,
- durch Anlegen einer Wechselspannung an die erste Erzeugerwicklung eine sich in die Prüfrichtung ausbreitende Ultraschallwelle erzeugt wird und
- an die zweite und - soweit vorhanden - jede weitere Erzeugerwicklung eine Wechselspannung angelegt wird, wenn im Hinblick auf die Ausbreitung der durch die erste Erzeugerwicklung erzeugten Ultraschallwelle die durch das Anlegen einer Wechselspannung an die zweite und - soweit vorhanden - jede weitere Erzeugerwicklung hervorgerufene Materialbewegung des Körpers die Ausbreitung einer Ultraschallwelle mit der festgelegten Frequenz und der festgelegten Wellenlänge konstruktiv verstärkt.

Der Erfindung liegt damit die Erkenntnis zugrunde, dass eine zunächst von einem EMAT erzeugte Ultraschallwelle durch gezielte Ansteuerung einer in Prüfrichtung hinter der ersten Erzeugerwicklung vorgesehenen zweiten Erzeugerwicklung derart beeinflusst werden kann, dass im Ergebnis eine Ultraschallwelle mit der vorher festgelegten Frequenz und der vorher festgelegten Wellenlänge entsteht.

Das erfindungsgemäße Verfahren und die erfindungsgemäße Vorrichtung erlauben es, sowohl die Signalfrequenz, als auch die Abstrahlcharakteristik sowie die Spurwellenlänge des Ultraschallsignals durch entsprechende Ansteuerung des EMAT frei einzustellen. Das erfindungsgemäße Verfahren und die erfindungsgemäße Vorrichtung erlauben eine berührungslose, koppelmittelfreie, Online-Prüfung an einem bewegten Material, beispielsweise in einer Fertigungslinie. Ebenso ist eine statische vollvolumetrische Prüfung von Stangen großer Länge von einem Stangenende aus möglich. Dies ist insbesondere wegen der sehr geringen Dämpfung der bei dem erfindungsgemäßen Verfahren und mit der erfindungsgemäßen Vorrichtung erzeugbaren Stabwellen möglich. Die sehr geringe Dämpfung ergibt sich daraus, dass die Frequenz und die Wellenlänge so gewählt werden können, dass ein Ultraschallwellen-Mode angeregt wird, der bei der gegebenen Geometrie und den gegebenen Materialeigenschaften des zu prüfenden Körpers besonders dispersionsarm ist.

Die Spurwellenlänge für die Erzeugung, bzw. den Empfang einer Ultraschallwelle ist von der Geometrie des zu prüfenden Körpers abhängig, beispielsweise bei einem stabförmigen Körper von dessen Durchmesser. Ferner ist der Grad der Dispersion einer Ultraschallwelle in einem Körper abhängig von der Geometrie des Körpers, insbesondere von dessen Durchmesser. Das bedeutet, dass bei einem ersten zu prüfenden Körper mit einem ersten Durchmesser eine erste Kombination einer Frequenz und einer Wellenlänge zu einer besonderes dispersionsarmen Ultraschallwelle führt, während bei einem zweiten zu prüfenden Körper mit einem zweiten Durchmesser eine zweite Kombination aus Frequenz und Wellenlänge zu einer besonderes dispersionsarmen Ultraschallwelle führt. Da mit dem erfindungsgemäßen Verfahren und der erfindungsgemäßen Vorrichtung die Frequenz und die Wellenlänge frei einstellbar sind, kann durch elektronische Ansteuerung des EMAT für den jeweiligen zu prüfenden Körper die Ultraschallwelle erzeugt werden, die bei diesem Körper besonders dispersionsarm ist. Es ist somit nicht mehr notwendig, die Wandlergeometrie an den zu prüfenden Körper anzupassen oder alternativ eine Wandlergeometrie zu wählen, die bei einem besonders breiten Spektrum möglicher Prüfkörpergeometrien vertretbare Messresultate liefert. Mit dem erfindungsgemäßen Verfahren und der erfindungsgemäßen Vorrichtung kann stets die für den jeweils zu prüfenden Körper optimale Ultraschallwelle ohne Änderungen der Wandlergeometrie eingestellt werden.

Die Anordnung der Erzeugerwicklungen in Prüfrichtung erlaubt es, ein besonders großes Vor/Rück-Verhältnis zu erzeugen. Da durch die Ansteuerung der zweiten und - soweit vorhanden - jeder weiteren Erzeugerwicklung die Ausbreitung der erzeugten Ultraschallwelle in die Prüfrichtung konstruktiv unterstützt wird, wird die Ausbreitung der erzeugten Ultraschallwelle in diese Prüfrichtung verstärkt.

Die Verwendung eines laufzeitgesteuerten Gruppenstrahlersystems erlaubt die Erzeugung sehr kleiner Spurwellen, beispielsweise von Spurwellen in der Größenordnung von einem Millimeter. Insbesondere kann eine Spurwelle erzeugt werden, die kleiner ist als der Abstand der Erzeugerwicklungen in Prüfrichtung, wobei dann die Breite der Erzeugerwicklung in Prüfrichtung kleiner sein sollte, als die halbe Wellenlänge.

Unter einem EMAT wird eine ggf. aus mehreren Bauteilen bestehende Vorrichtung verstanden, die zumindest zwei Erzeugerwicklungen und/oder zwei Empfängerwicklungen aufweist, um nach dem Prinzip eines elektromagnetischen UltraschallWandlers eine Ultraschallwelle in einem elektrisch leitfähigen Körper zu erzeugen, bzw. eine in einem elektrisch leitfähigen Körper schwingende Ultraschallwelle zu empfangen. Ferner kann ein EMAT nach diesem Sprachgebrauch zusätzliche Elektronik, wie beispielsweise eine Ansteuerelektronik oder eine Auswerteelektronik aufweisen. Soweit der EMAT mit mindestens zwei Erzeugerwicklungen und mindestens zwei Empfängerwicklungen ausgeführt ist, müssen die Erzeugerwicklungen und die Empfängerwicklungen nicht in dem gleichen Gehäuse zusammengefasst sein. Der Begriff EMAT richtet sich somit vielmehr auf Funktionseinheiten und ist hinsichtlich des tatsächlichen körperlichen Aufbaus einer so bezeichneten Vorrichtung nicht beschränkend zu verstehen.

Bei dem erfindungsgemäßen Verfahren wird ein EMAT mit mindestens zwei Erzeugerwicklungen und/oder mindestens zwei Empfängerwicklungen eingesetzt. In einer besonders bevorzugten Ausführungsform werden deutlich mehr als zwei Wicklungen, insbesondere bevorzugt mehr als 31 und ganz besonders bevorzugt mehr als 255 Erzeuger-, bzw. Empfängerwicklungen eingesetzt.

Die Erzeugerwicklungen des EMAT sind in einer Prüfrichtung hintereinander angeordnet. Als Prüfrichtung wird die Richtung verstanden, in die sich die zu erzeugende Welle ausbreiten soll. In einer bevorzugten Ausführungsform wird das erfindungsgemäße Verfahren zur Prüfung platten- oder stabförmiger Körper eingesetzt. Stabförmige Körper werden regelmäßig in Richtung ihrer Längserstreckung geprüft. Eine Prüfrichtung kann somit eine Richtung sein, in die die Längsachse eines zu prüfenden stabförmigen Körpers weist. Plattenförmige Körper werden abhängig von der Form des Körpers geprüft. Häufig sind die zu prüfenden plattenförmigen Körper Bänder, beispielsweise Metallbänder. Diese weisen regelmäßig eine große Längserstreckung, eine Breite und eine im Verhältnis zur Breite kleine Dicke auf. Bei diesen plattenförmigen Körpern ist die Prüfrichtung regelmäßig die Breitenrichtung des Körpers. Plattenförmige Körper können aber auch in Richtung ihrer Längserstreckung geprüfte werden, vor allem, wenn die Längserstreckung gering ist, wie beispielsweise bei einem Blech.

Das erfindungsgemäße Verfahren sieht vor, dass eine Frequenz und eine Wellenlänge der zu erzeugenden Ultraschallwelle festgelegt werden, mit der der Körper geprüft werden soll.

In einer besonders bevorzugten Ausführungsform werden die Frequenz und die Wellenlänge aufgrund eines Dispersionsdiagramms für den zu prüfenden Körper ausgewählt. In einem Dispersionsdiagramm werden für die einzelnen Moden einer Ultraschallwelle der Verlauf der jeweiligen Ausbreitungsgeschwindigkeit des Mode der Ultraschallwelle über einem Faktor aufgetragen, der sich aus einer Geometrieangabe multipliziert mit der Frequenz ergibt, bei einer Plattenwelle beispielsweise Plattendicke x Frequenz oder bei einer Stabwelle Stabdurchmesser x Frequenz. In dem Dispersionsdiagramm lässt sich für jeden Mode eine maximale Ausbreitungsgeschwindigkeit und der dazugehörige Term aus Geometriefaktor x Frequenz ablesen. In einer bevorzugten Ausführungsform wird zunächst ein Mode einer Ultraschallwelle festgelegt, mit dem der Körper geprüft werden soll. Anschließend wird aus dem Dispersionsdiagramm die Kombination aus Frequenz und Wellenlänge ausgelesen, die bei dem gewählten Mode die maximale Ausbreitungsgeschwindigkeit ergibt. In einer besonderes bevorzugten Ausführungsform wird nach der Prüfung des Körpers mit einem ersten Mode einer Ultraschallwelle ein zweiter Mode festgelegt und aus dem Dispersionsdiagramm die Frequenz und Wellenlänge gewählt, die für eine Ultraschallwelle dieses zweiten Modes die maximale Ausbreitungsgeschwindigkeit ergibt.

Gemäß dem erfindungsgemäßen Verfahren wird dann durch Anlegen einer Wechselspannung an die erste Erzeugerwicklung eine sich in Prüfrichtung ausbreitende Ultraschallwelle erzeugt. Selbstverständlich breitet sich die Ultraschallwelle auch in die der Prüfrichtung entgegen gesetzten Richtung aus. Für die Beschreibung des erfindungsgemäßen Verfahrens ist es jedoch lediglich notwendig, die sich in Prüfrichtung ausbreitende Ultraschallwelle zu betrachten.

Ferner wird an die zweite und - soweit vorhanden - jede weitere Erzeugerwicklung eine Wechselspannung angelegt, wenn im Hinblick auf die Ausbreitung der durch die erste Erzeugerwicklung erzeugten Ultraschallwelle die durch das Anlegen einer Wechselspannung an die zweite und - soweit vorhanden - jede weitere Erzeugerwicklung hervorgerufene Materialbewegung des Körpers die Ausbreitung einer Ultraschallwelle mit der festgelegten Frequenz und der festgelegten Wellenlänge konstruktiv verstärkt. Somit kann durch das erfindungsgemäße Verfahren eine Ultraschallwelle erzeugt werden, deren Frequenz und Wellenlänge frei einstellbar sind.

Gemäß einer bevorzugten Ausführungsform ist vorgesehen, daß der EMAT eine erste Empfängerwicklung und mindestens eine zweite Empfängerwicklung aufweist, wobei die zweite und - soweit vorhanden - jede weitere Empfängerwicklung in einer Prüfrichtung hinter der ersten Empfängerwicklung angeordnet ist,
**dadurch gekennzeichnet,**
- **daß** mit der ersten Empfängerwicklung ein erstes Messsignal erzeugt wird und
- daß mit der zweiten Empfängerwicklung ein zweites Messsignal erzeugt wird und
- dass - soweit vorhanden - mit jeder weiteren Empfängerwicklung ein weiteres Messsignal erzeugt wird und
- daß zur Erzeugung eines Ausgangsmesssignal das erste Messsignal durch ein Halteglied um eine der festgelegten zweiten Frequenz und Wellenlänge entsprechenden Laufzeit der Ultraschallwelle von der ersten Empfängerwicklung zur zweiten Empfängerwicklung entspricht.

In dem gemäß dieser Ausführungsform des erfindungsgemäßen Verfahrens die sich in dem zu prüfenden Körper ausbreitende Ultraschallwelle von mindestens zwei nacheinander angeordneten Empfängerwicklungen aufgenommen wird und die Messsignale der Empfängerwicklungen unter Berücksichtigung der der gewählten Frequenz und Wellenlänge entsprechenden Laufzeit der Ultraschallwelle addiert werden, wird ein Ausgangsmesssignal erzeugt, das besonders für die festgelegte Ultraschallwelle empfindlich ist.

In einer bevorzugten Ausführungsform kann eine Belegungsfunktion auf das erste Messsignal, das zweite Messsignal und/oder das Ausgangsmesssignal angewendet werden, um bestimmte Wellenlängen bevorzugt zu empfangen. Derartige Belegfunktionen können beispielsweise sogenannte Window-Funktionen, z.B. ein Hamming-Filter oder Dolph-Chebyshev-Filter. sein. Diese werden vorzugsweise bei EMATs mit mehr als drei Erzeugerwicklungen, bzw. Empfängerwicklungen angewandt.

Die Erkenntnisse der Erfindung lassen sich gleichsam auf ein Verfahren anwenden, bei dem eine auf andere Weise erzeugte Ultraschallwelle empfangen werden soll. Ein erfindungsgemäßes Verfahren zur Prüfung eines elektrisch leitfähigen Körpers, bei dem ein EMAT eingesetzt wird, der eine erste Empfängerwicklung und mindestens eine zweite Empfängerwicklung aufweist, wobei die zweite und - soweit vorhanden - jede weitere Empfängerwicklung in einer Prüfrichtung hinter der ersten Empfängerwicklung angeordnet ist, sieht deshalb vor, dass
- eine Frequenz und eine Wellenlänge einer zu erzeugenden Ultraschallwelle festgelegt werden, mit der der Körper geprüft werden soll,
- die Ultraschallwelle mit der festgelegten Frequenz und der festgelegten Wellenlänge erzeugt wird,
- mit der ersten Empfängerwicklung ein erstes Messsignal erzeugt wird und
- mit der zweiten Empfängerwicklung ein zweites Messsignal erzeugt wird und
- soweit vorhanden - mit jeder weiteren Empfängerwicklung ein weiteres Messsignal erzeugt wird und
- zur Erzeugung eines Ausgangsmesssignal das erste Messsignal durch ein Halteglied um eine Haltezeit verzögert wird und zu dem zweitem und - falls vorhanden - jedem weiteren Messsignal addiert wird, wobei die Haltezeit der Laufzeit der Ultraschallwelle entspricht, wie sie sich aus der durch die festgelegte Frequenz und Wellenlänge ergebenden Ausbreitungsgeschwindigkeit und dem Abstand der ersten Empfängerwicklung zur zweiten Empfängerwicklung ergibt

In einer bevorzugten Ausführungsform der erfindungsgemäßen Verfahren wird nach der Prüfung des Körpers mit einer Ultraschallwelle einer ersten Frequenz/Wellenlänge-Kombination eine weitere Prüfung mit einer Ultraschallwelle einer zweiten Frequenz/Wellenlänge-Kombination durchgeführt, wozu eine zweite Frequenz und eine zweite Wellenlänge einer zu erzeugenden zweiten Ultraschallwelle festgelegt werden,
- durch Anlegen einer Wechselspannung zum Zeitpunkt t₁ an die erste Erzeugerwicklung eine sich in Prüfrichtung ausbreitende erste Ultraschallwelle mit der ersten festgelegten Frequenz/Wellenlänge-Kombination erzeugt und
- an die zweite und jede weitere Erzeugerwicklung eine Wechselspannung jeweils dann angelegt, wenn die zum Zeitpunkt t₁ erzeugte Ultraschallwelle dadurch konstruktiv verstärkt wird und
- durch Anlegen einer Wechselspannung zu einem späteren Zeitpunkt t₂ an die erste Erzeugerwicklung eine sich in Prüfrichtung ausbreitende zweite Ultraschallwelle mit der zweiten festgelegten Frequenz/Wellenlänge-Kombination erzeugt und
- an die zweite und jede weitere Erzeugerwicklung eine Wechselspannung jeweils dann angelegt, wenn die zum Zeitpunkt t₂ erzeugte Ultraschallwelle dadurch konstruktiv verstärkt wird.

Das so mögliche Prüfen mit Ultraschallwellen zweier Moden erlaubt eine Klassierung der detektierten Fehlstellen auf Innen- bzw. Oberflächenfehler, weil die verschiedenen Moden unterschiedliche Empfindlichkeitsprofile über dem Materialquerschnitt besitzen.

In einer bevorzugten Ausführungsform weist der zu prüfende Körper zwei Enden auf. Zur Prüfung des Körpers kann der EMAT zunächst das eine Ende des zu prüfenden Körpers umfassend halten und der Körper geprüft werden. Dann kann der EMAT das zweite Ende des zu prüfenden Körpers umfassend halten und die Prüfung des Körpers in entgegengesetzter Richtung fortgesetzt werden.

Jedes EMAT-System besitzt in der Regel eine verhältnismäßig große Totzone. In diesem Bereich (Nahfeld des EMAT-Wandlers) hat sich die Ultraschallwelle noch nicht vollständig aufgebaut oder/und das Sendesignal spricht auf den Empfangswandler über, so dass eine Prüfung nur bedingt möglich ist. Die bevorzugte Ausführungsform erlaubt es, die Richtcharakteristik elektronisch umzuschalten, also die Prüfrichtung umzukehren. So kann zunächst ein Stabende geprüft werden und nachdem der Stab durch den Wandler transportiert wurde, die Richtcharakteristik elektronisch umgeschaltet werden, um das andere Stabende zu prüfen, ohne dass ein ungeprüfter Bereich entsteht. Wird der EMAT an dem einen Ende des zu prüfenden Körpers angesetzt, so liegt die aktuelle Totzone in diesem Bereich. Wird der EMAT dann zur Prüfung des Körpers an das andere Ende bewegt, so kann nach Umkehr der Richtcharakteristik in die entgegengesetzt Prüfrichtung geprüft werden, also auch das erste Ende des zu prüfenden Körpers.

Die erfindungsgemäße Vorrichtung zur Prüfung eines elektrisch leitfähigen Körpers mit einem Prüfkopf, der mindestens einen EMAT aufweist, der eine erste Erzeugerwicklung und eine zweite Erzeugerwicklung aufweist, wobei die zweite Erzeugerwicklung in einer Prüfrichtung hinter der ersten Erzeugerwicklung angeordnet ist, sieht vor, dass
- eine Erzeugerwicklung zur Erzeugung einer Ultraschallwelle eines Longitudinal-Modes von einem Wicklungsanfang zu einem Wicklungsende derart um eine Durchgangsöffnung, in die der zu prüfende Körper eingebracht werden kann, gewickelt ist, daß sich die Erzeugerwicklung im wesentlichen in einer Ebene befindet, die in einem Winkel von 90° zur Prüfrichtung steht und
- eine weitere Erzeugerwicklung zur Erzeugung einer Ultraschallwelle eines Longitudinal-Modes von einem Wicklungsanfang zu einem Wicklungsende derart um die Durchgangsöffnung, gewickelt ist, daß sich die Erzeugerwicklung im wesentlichen in einer weiteren Ebene befindet, die in einem Winkel von 90° steht und die beiden Ebenen zueinander beabstandet sind,
und/oder dass
- eine Erzeugerwicklung zur Erzeugung einer Ultraschallwelle eines Torsions-Mode von einem Wicklungsanfang zu einem Wicklungsende derart geführt wird, daß sich ein erster Teilabschnitt der Erzeugerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Erzeugerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle und
- eine weitere Erzeugerwicklung zur Erzeugung einer Ultraschallwelle eines Torsions-Mode von einem Wicklungsanfang zu einem Wicklungsende derart geführt wird, daß sich ein erster Teilabschnitt der Erzeugerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Erzeugerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle.

Damit gemäß der Erfindung die Wellenlänge der zu erzeugenden Ultraschallwelle frei einstellbar ist, ist es zweckmäßig, dass durch die Erzeugerwicklung selbst keine Wellenlänge festgelegt wird. Die Erzeugerwicklung soll deshalb vorzugsweise als Linienelement ausgeführt sein, also in Prüfrichtung eine minimale Erstreckung aufweisen. Dies wird bei Erzeugerwicklungen zur Erzeugung einer Ultraschallwelle eines Longitudinal-Mode dadurch erzielt, dass die Windungen der Erzeugerwicklung im wesentlichen in einer Ebene vorgesehen sind. Je weniger Windungen die Erzeugerwicklung aufweist und je dünner der Querschnitt des die Wicklung bildenden Drahts, desto näher kommt eine Erzeugerwicklung dem Idealzustand, bei dem die Erzeugerwicklung nahezu nur in einer Ebene liegt.

In einer bevorzugten Ausführungsform weist die Wicklung einen Draht mit einem Durchmesser von 1 mm auf.

In einer bevorzugten Ausführungsform ist die die Mitte der ersten Erzeugerwicklung bildende Ebene um einen Abstand von mehr als der Hälfte der minimal mit der Vorrichtung zu erzeugenden Wellenlänge von der die Mitte der zweiten Erzeugerwicklung bildenden Ebene beabstandet.

Bei Erzeugerwicklungen zur Erzeugung einer Ultraschallwelle eines Torsions-Mode kann das Aufprägen einer Wellenlänge durch die konstruktive Ausführung der Erzeugerwicklung dadurch vermieden werden, dass der sich in Prüfrichtung erstreckende Teilabschnitt der Erzeugerwicklung kurz gewählt wird.

Der Aufbau der bei der erfindungsgemäßen Vorrichtung vorgesehenen Erzeugerwicklungen kann gleichfalls als Aufbau für ergänzend oder alternativ bei der erfindungsgemäßen Vorrichtung vorgesehenen Empfängerwicklungen eingesetzt werden.

Das erfindungsgemäße Verfahren und/oder die erfindungsgemäße Vorrichtung werden insbesondere bevorzugt zur Prüfung eines platten- oder stabförmigen Körpers eingesetzt. Bei diesem Einsatz wird in dem zu prüfenden Körper eine geführte Welle, nämlich eine Plattenwelle (eindimensional geführte Welle) oder Stabwellen (zweidimensionale geführte Welle) erzeugt. Diese Ultraschallwellen können Stabwellen sein, die elliptisch polarisiert sind. Die stabförmigen Körper können beispielsweise Profile sein.

Nachfolgend wird die Erfindung anhand einer lediglich ein Ausführungsbeispiel der Erfindung zeigenden Zeichnung näher erläutert. Darin zeigen:
- Fig. 1:: Ein Blockdiagramm der Elektronik eines Prüfkopfs einer erfindungsgemäßen Vorrichtung,
- Fig. 2:: drei Erzeugerspulen eines EMAT der erfindungsgemäßen Vorrichtung in einer schematischen perspektivischen Ansicht,
- Fig. 3:: eine schematische Darstellung der Stromrichtung, Magnetfeldrichtung und Kraftrichtung bei sechs Erzeugerspulen eines EMAT einer erfindungs- gemäßen Vorrichtung,
- Fig. 4:: eine schematische Darstellung der Stromrichtung, Magnetfeldrichtung und Kraftrichtung bei sechs Erzeugerspulen eines EMAT einer erfindungs- gemäßen Vorrichtung,
- Fig. 5:: ein Dispersionsdiagramm einer Platte,
- Fig. 6:: eine schematische Darstellung des prinzipiellen Aufbaus eines laufzeitge- steuerten Gruppenstrahlers mit 8 Erzeugerwicklungen, und
- Fig. 7:: eine schematische Darstellung des prinzipiellen Aufbaus eines laufzeitge- steuerten Gruppenempfängers mit 8 Empfängerwicklungen.

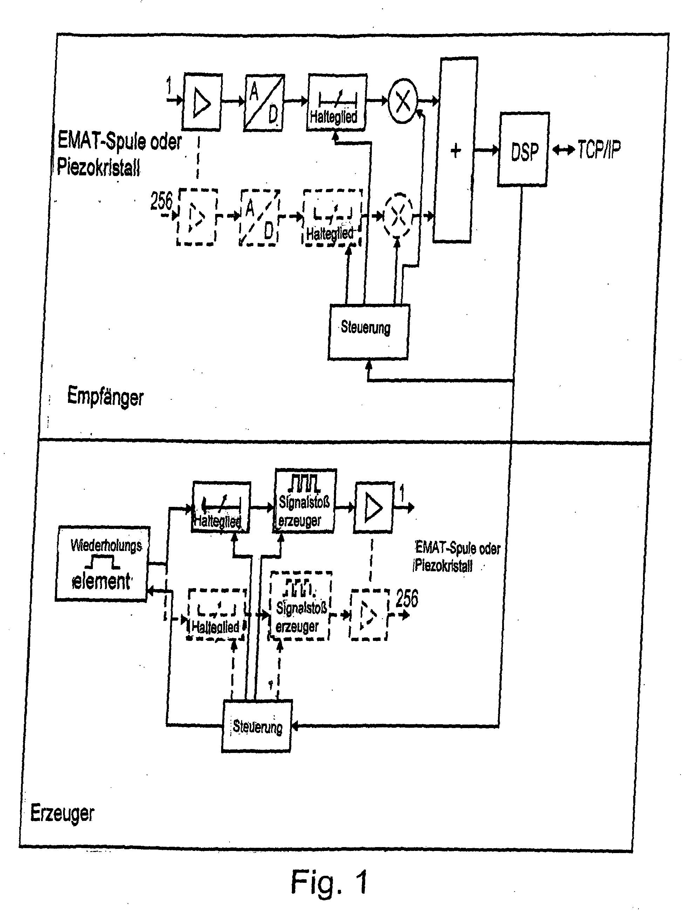

Das in Fig. 1 dargestellte Blockdiagramm zeigt einen Erzeugerbereich und einen Empfängerbereich einer erfindungsgemäßen Vorrichtung. Der Erzeuger (Transmitter) empfängt Steuerparameter von dem "DSP"-Bauteil (Digitales Signal Prozessor-Bauteil). Diese Steuerparameter werden von einer Steuerung verwendet, um jeden von insgesamt 256 Erzeugerwicklungen anzusteuern. Die Ansteuerung einer jeweiligen Erzeugerwicklung weist ein Halteglied ("Delaytime") sowie einen Signalstoßerzeuger ("Burstgenerator") auf. In der in der Fig. 1 dargestellten Ausführungsform ist für jede Empfängerwicklung ein eigener Burstgenerator vorgesehen. Diese Burstgeneratoren werden jeweils durch einen Puls getriggert, wobei der jeweilige Puls für den jeweiligen Burstgenerator so verzögert wird, daß er den jeweiligen Burstgenerator so triggert, daß dieser die jeweilige Erzeugerwicklung ansteuert, wenn die durch diese Ansteuerung der Erzeugerwicklung hervorgerufene Materialbewegung des Körpers im Hinblick auf die Ausbreitung der durch die davor liegenden Erzeugerwicklungen erzeugte Ultraschallwelle die Ausbreitung einer Ultraschallwelle mit einer vorher festgelegten Frequenz und einer vorher festgelegten Wellenlänge konstruktiv verstärkt. Ferner weist der Erzeuger ein Wiederholungselement auf, um eine Ultraschallwelle nach dem erfindungsgemäßen Verfahren wiederholt zu erzeugen.

Alternativ kann ein einziger Burstgenerator vorgesehen sein. Der Burst des Burstgenerators wird durch Halteglieder so verzögert, daß er die jeweilige Erzeugerwicklung erst erreicht, wenn die durch diese Ansteuerung der Erzeugerwicklung hervorgerufene Materialbewegung des Körpers im Hinblick auf die Ausbreitung der durch die davor liegenden Erzeugerwicklungen erzeugte Ultraschallwelle die Ausbreitung einer Ultraschallwelle mit einer vorher festgelegten Frequenz und einer vorher festgelegten Wellenlänge konstruktiv verstärkt.

Der Empfänger ("Receiver") weist (nicht dargestellte) Empfängerwicklungen auf. Die Empfängerwicklungen empfangen ein Signal und erzeugen ein Messsignal, das von einem Analog/Digitalwandler in ein digitales Messsignal umgewandelt wird. Das jeweilige Messsignal wird durch ein Halteglied digital verzögert ("Delaytime"). Die jeweilige Haltezeit des Halteglieds wird durch eine Steuerung des Empfängers vorgegeben. Die Haltezeit des jeweiligen Messsignals ist derart gewählt, dass sie der Laufzeit der Ultraschallwelle entspricht, wie sie sich aus der durch die festgelegte Frequenz und Wellenlänge ergebenden Ausbreitungsgeschwindigkeit und dem Abstand der jeweiligen Empfängerwicklung zur letzten Empfängerwicklung ergibt. Die Messsignale werden anschließend addiert. In der in Fig. 1 dargestellten besonderen Ausführungsform ist es vorgesehen, das Messsignal nach dem Halteglied mit einer Belegungsfunktion zu multiplizieren, um bestimmte Wellenlängen bevorzugt zu empfangen. Die Art der Belegfunktion wird ebenfalls durch die Steuerung des Empfängers vorgegeben.

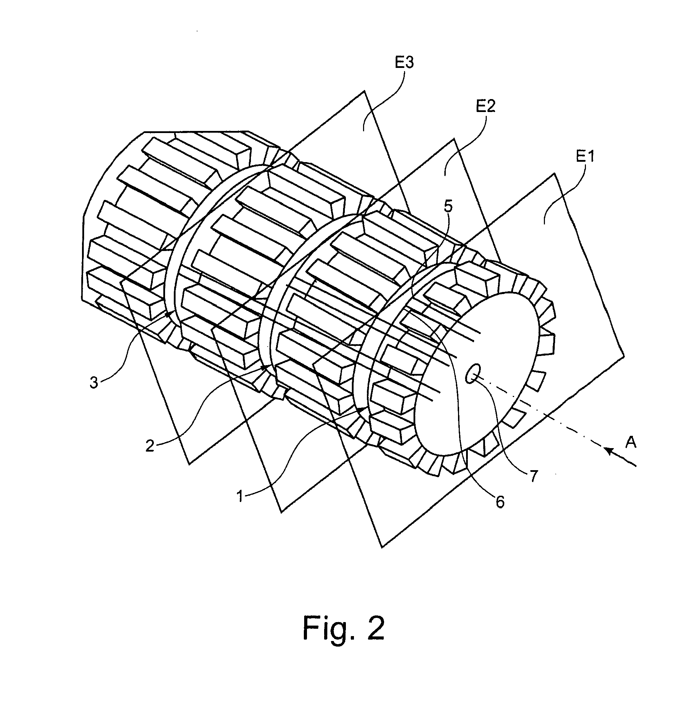

In der Fig. 2 sind die Erzeugerwicklungen 1, 2, 3 einer erfindungsgemäßen Vorrichtung. Dargestellt sind Erzeugerwicklungen zur Erzeugung einer Ultraschallwelle eines Longitudinal-Mode. Die jeweilige Erzeugerwicklung ist von einem Wicklungsanfang 5 zu einem Wicklungsende 6 derart um eine Durchgangsöffnung 7, durch die der zu prüfende Körper in, bzw. entgegengesetzt der Prüfrichtung bewegt werden kann, gewickelt, dass sich die Erzeugerwicklung im wesentlichen in einer Ebene E1 befindet, die in einem Winkel von 90° zur Prüfrichtung A steht. Die weiteren Erzeugerwicklungen sind in weiteren Ebenen E2, E3 angeordnet, die zueinander und zu der Ebene E1 beabstandet sind. In der in der Fig. 2 dargestellten Ausführungsform weist die Erzeugerwicklung eine einzige Windung auf (wobei auch mehrere Windungen möglich sind). Dadurch wird erreicht, dass die Erzeugerwicklung im wesentlichen als Linienelement ausgeführt ist und eine minimale Erstreckung in Richtung der Prüfrichtung A aufweist.

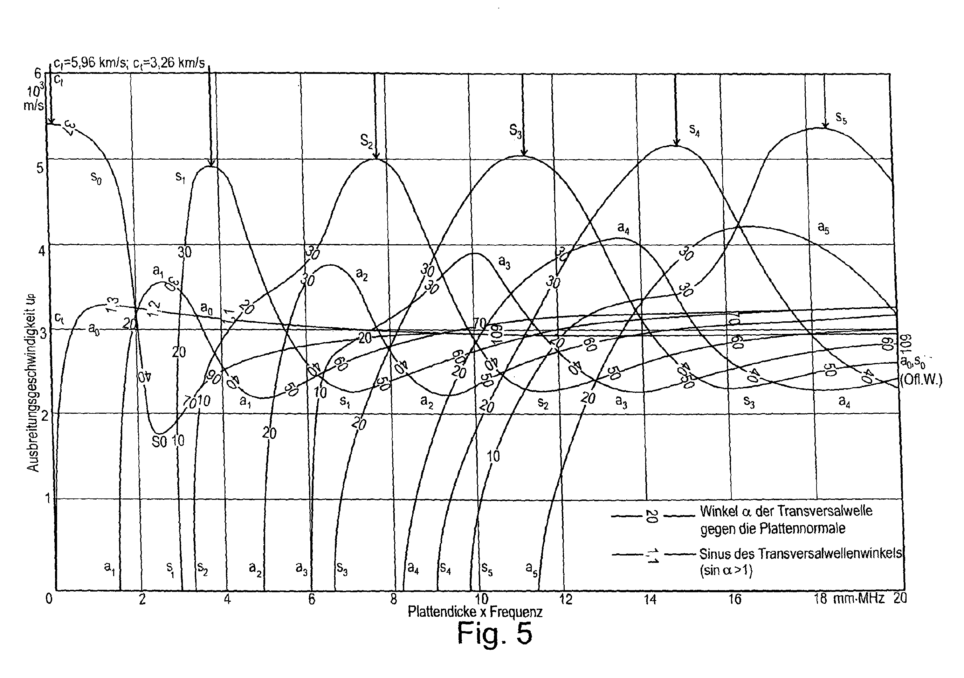

Zur Prüfung des (nicht dargestellten) zu prüfenden stabförmigen Körpers wird ein Mode einer Ultraschallwelle festgelegt, mit dem der Körper geprüft werden soll. Aufgrund eines Dispersionsdiagramms (Fig. 5) werden eine Frequenz und eine Wellenlänge einer zu erzeugenden Ultraschallwelle festgelegt, mit der der Körper geprüft werden soll. Die Frequenz und die Wellenlänge werden derart gewählt, dass sich für den festgelegten Mode eine maximale Ausbreitungsgeschwindigkeit ergibt. Dies führt dazu, dass sich die erzeugte Ultraschallwelle dispersionsarm in dem zu prüfenden Körper ausbreitet. Nach der Festlegung der Frequenz und der Wellenlänge wird eine Wechselspannung an die erste Erzeugerwicklung 1 angelegt, wodurch eine sich in die Prüfrichtung A ausbreitende Ultraschallwelle in dem zu prüfenden Körper erzeugt wird. Anschließend wird an die zweite Erzeugerwicklung 2 eine Wechselspannung angelegt, wenn im Hinblick auf die Ausbreitung der durch die erste Erzeugerwicklung 1 erzeugten Ultraschallwelle die durch das Anlegen einer Wechselspannung an die zweite Erzeugerwicklung 2 hervorgerufene Materialbewegung des zu prüfenden Körpers die Ausbreitung einer Ultraschallwelle mit der festgelegten Frequenz und der festgelegten Wellenlänge konstruktiv verstärkt. Anschließend wird an die dritte Erzeugerwicklung 3 eine Wechselspannung angelegt, wenn im Hinblick auf die Ausbreitung der durch die erste Erzeugerwicklung 1 und zweite Erzeugerwicklung 2 erzeugten Ultraschallwelle die durch das Anlegen einer Wechselspannung an die dritte Erzeugerwicklung 3 hervorgerufene Materialbewegung des zu prüfenden Körpers die Ausbreitung dieser Ultraschallwelle mit der festgelegten Frequenz und der festgelegten Wellenlänge konstruktiv verstärkt.

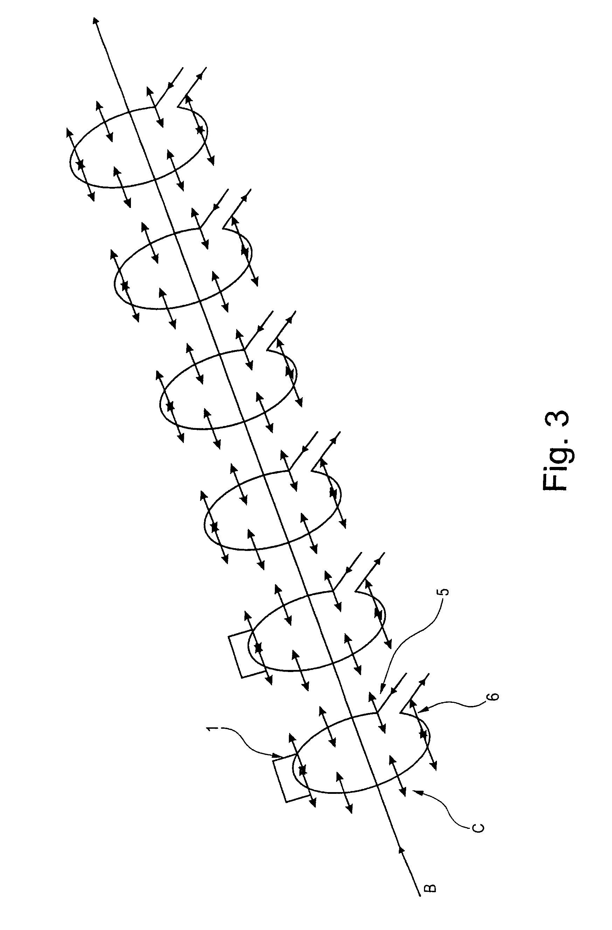

Fig. 3 zeigt schematisch die zu erzeugende Stromrichtung, die zu erzeugende Magnetfeldrichtung und die sich daraus ergebende Kraftrichtung für das Erzeugen einer Ultraschallwelle mit einem Longitudinal-Mode. In der Fig. 3 sind sechs Erzeugerwicklungen dargestellt, die im wesentlichen gleich aufgebaut sind. Die Erzeugerwicklung 1 ist von einem Wicklungsanfang 5 zu einem Wicklungsende 6 derart um eine (nicht dargestellte) Durchgangsöffnung gewickelt, dass sich die Erzeugerwicklung im wesentlichen in einer Ebene befindet. Durch den in dem EMAT vorgesehenen (nicht dargestellten) Magnet wird ein Magnetfeld über den zu prüfenden Körper erzeugt, dass eine Magnetfeldrichtung B aufweist. Die an die Erzeugerwicklung 1 angelegte Wechselspannung weist in dem in Fig. 3 dargestellten Moment eine Stromrichtung auf, die von dem Wicklungsanfang 5 zum Wicklungsende 6 fließt. Dadurch wird in dem zu prüfenden Körper eine Kraft erzeugt, die in Richtung der Pfeile C weist, die die Kräfte bei Wechselstrom darstellen.

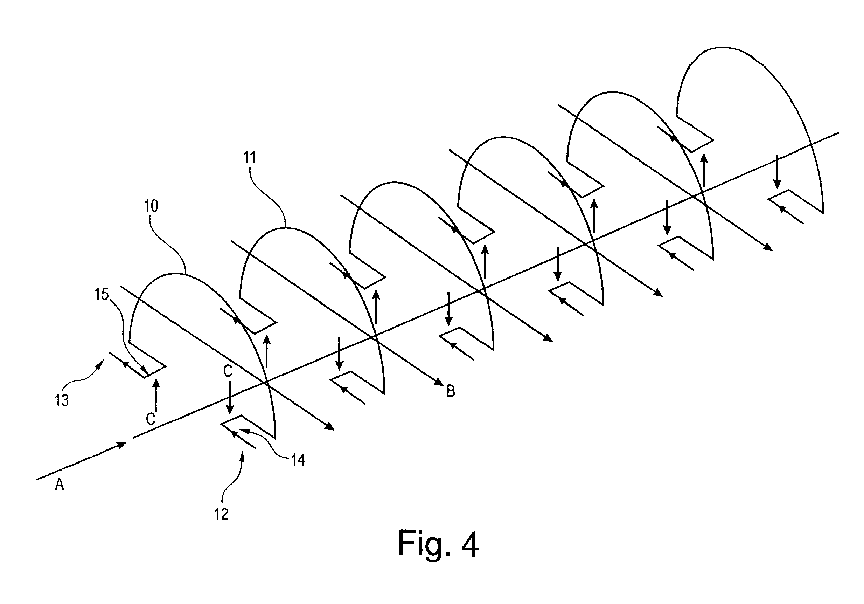

In der Fig. 4 werden sechs Erzeugerspulen gezeigt, die eine Ultraschallwelle mit einem Torsions-Mode erzeugen. Eine Erzeugerwicklung 10 wird von einem Wicklungsanfang 12 zu einem Wicklungsende 13 derart geführt, dass sich ein erster Teilabschnitt 14 der Erzeugerwicklung 10 in eine Richtung erstreckt, die der Prüfrichtung A entspricht, wobei der erste Teilabschnitt 14 kürzer ist, als die Hälfte der Wellenlänge der zu erzeugenden Ultraschallwelle. Ein weiterer Teilabschnitt 15 der Erzeugerwicklung 10 erstreckt sich in eine Richtung, die der Prüfrichtung A entgegengerichtet ist, wobei der weitere Teilabschnitt 15 kürzer ist, als die Hälfte der Wellenlänge der zu erzeugenden Ultraschallwelle. Eine weitere Erzeugerwicklung 11 ist vergleichbar zu der Erzeugerwicklung 10 aufgebaut.

Zum Erzeugen einer Ultraschallwelle mit einem Torsions-Mode wird von dem (nicht dargestellten) Magneten des EMAT ein Magnetfeld erzeugt, dessen Magnetfeldrichtung sich in Richtung des Pfeils B erstreckt. Die Erzeugerwicklung wird von einem Strom durchflossen, der in der in Fig. 4 momentan dargestellten Situation vom Wicklungsanfang 12 zum Wicklungsende 13 fließt. Dadurch werden in dem zu prüfenden Körper Kräfte ausgeübt, die sich in Richtung der Pfeile C erstrecken.

In Fig. 5 ist ein Dispersionsdiagramm für eine Platte dargestellt. Vergleichbare Diagramme existieren für Stäbe. Das Dispersionsdiagramm zeigt für die unterschiedliche Mode S₀, S₁, S₂, S₃, S₄, S₅, a₀, a₁, a₂, a₃, a₄, a₅ Kurven, die die Ausbreitungsgeschwindigkeit des entsprechenden Mode der Ultraschallwelle im Verhältnis zum einem Faktor Plattendicke x Frequenz darstellt. Zur Prüfung eines Körpers wird ein Mode ausgewählt, beispielsweise der S₁-Mode, mit dem der Körper geprüft werden soll. Aus dem in Fig. 5 dargestellten Dispersionsdiagramm wird dann der Faktor (Plattendicke x Frequenz) ausgewählt, der die maximale Ausbreitungsgeschwindigkeit dieses Mode ergibt. Dadurch wird erreicht, dass sich der Mode dieser Ultraschallwelle möglichst dispersionsarm durch den zu prüfenden Körper bewegt.

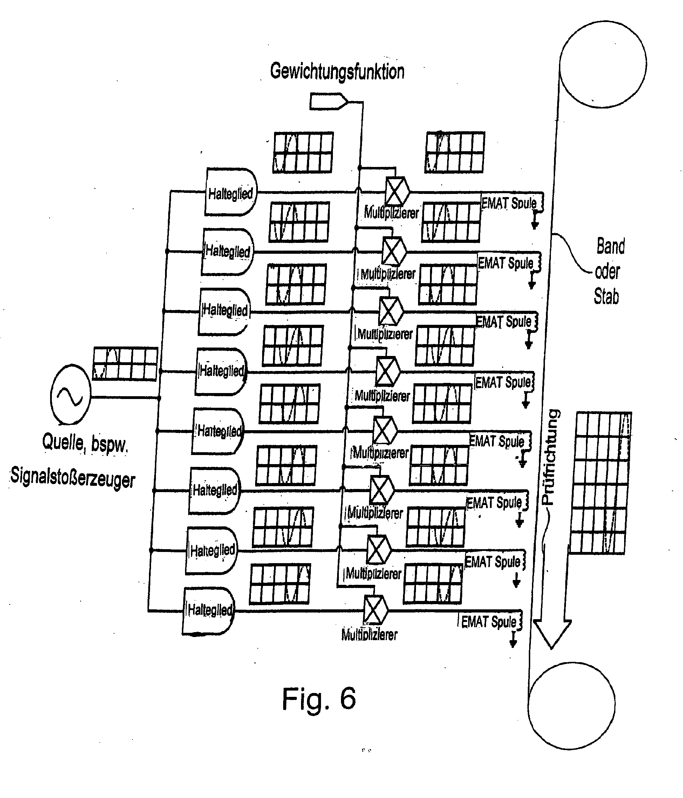

In Fig. 6 wird in der schematischen Darstellung des prinzipiellen Aufbaus eines laufzeitgesteuerten Gruppenstrahlers mit 8 Erzeugerwicklungen anhand der ebenfalls in der Fig. 6 wiedergegebenen Diagramme veranschaulicht, wie durch geeignetes Anlegen einer Wechselspannung an eine zweite oder nachfolgende Erzeugerwicklung eine Materialbewegung des zu prüfenden Körpers hervorgerufen werden kann, die die Ausbreitung einer Ultraschallwelle mit der festgelegten Frequenz und der festgelegten Wellenlänge konstruktiv verstärkt. Hierzu erzeugt eine Signalquelle ein Signal, das den 8 vorgesehenen Haltegliedern ("Delay") zugeführt wird. Diese Halteglieder verzögern das Signal, nämlich gerade so, dass an die zweite oder eine nachfolgende Erzeugerwicklung eine Wechselspannung angelegt wird, wenn im Hinblick auf die Ausbreitung der durch die erste Erzeugerwicklung erzeugten Ultraschallwelle die durch das Anlegen einer Wechselspannung an die zweite oder eine nachfolgende Erzeugerwicklung hervorgerufene Materialbewegung des Körpers die Ausbreitung einer Ultraschallwelle mit der festgelegten Frequenz und der festgelegten Wellenlänge konstruktiv verstärkt. Über eine Gewichtsfunktion ("Weightfunction") können die Einzelsignale der Halteglieder über die jeweiligen Multiplikatoren ("Multiplier") gewichtet werden. Man erkennt in den den Multipliern nachfolgenden Diagramme die unterschiedlichen Amplituden der jeweiligen Signale. Aufgrund des gezielten Anlegens der Wechselspannungen an die jeweiligen Erzeugerwicklungen verstärkt sich die in Prüfungsrichtung bewegende Ultraschallwelle konstruktiv, so dass das ebenfalls als Diagramm dargestellte Endsignal in dem zu prüfenden Körper erzeugt wird.

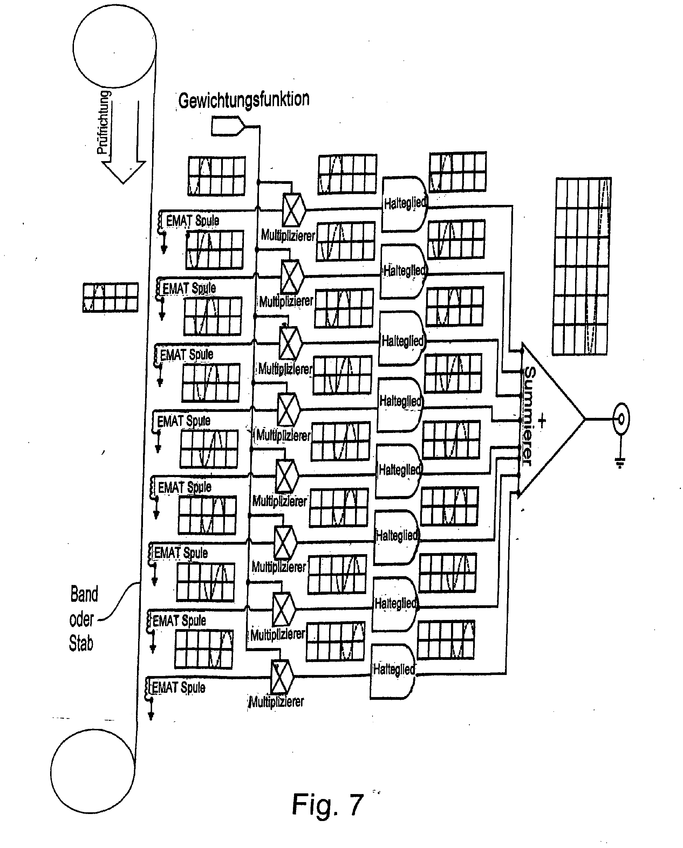

Vergleichbar ist der in Fig. 7 schematisch dargestellt Aufbau des laufzeitgesteuerten Gruppenempfängers mit 8 Empfängerwicklungen. Hier wird ein Signal von den 8 Empfängerwicklungen empfangen, die ein jeweiliges Messsignal (erstes Messsignal, zweites Messsignal) erzeugen. Diese Messsignale sind in den Diagrammen neben den jeweiligen Empfängerwicklungen verdeutlicht. Man erkennt, dass das jeweilige Signal die jeweils nachgeschaltete Empfängerwicklung später erreicht. Über eine Gewichtungsfunktion ("Weightfunction") können die Messsignale der einzelnen Empfängerwicklungen gewichtet werden, in dem der jeweils zugeordnete Wert über einen Multiplikator ("Multiplier") mit dem Messsignal multipliziert wird. Die dem Multiplier nachgeschalteten Haltegliedern ("Delay") verzögern die jeweiligen Messsignale um eine Haltezeit. Die Haltezeit ist für das jeweilige Messsignal derart bemessen, dass alle Signale nach Verlassen des Halteglieds zeitlich gleichläufig sind, wie in den entsprechenden Diagrammen dargestellt. Über ein Additionsglied ("Adder") werden die die Halteglieder verlassenen Signale zu einem zusammengesetzten, stärkeren Signal addiert.

## Patentansprüche

1. Verfahren zur Prüfung eines elektrisch leitfähigen Körpers mit einem EMAT, der als laufzeitgesteuerten Gruppenstrahler und/oder laufzeitgesteuerter Gruppenempfänger betrieben wird,
**dadurch gekennzeichnet,**
**daß** mittels des EMAT eine geführte ein- oder zweidimensionale Welle in dem elektrisch leitfähigen Körper erzeugt, bzw. mittels des EMAT eine geführte ein-oder zweidimensionale Welle in dem elektrisch leitfähigen Körper erfaßt wird.

2. Verfahren zur Prüfung eines elektrisch leitfähigen Körpers, insbesondere nach Anspruch 1, bei dem ein EMAT mit mindestens einer ersten Erzeugerwicklung einer zweiten Erzeugerwicklung eingesetzt wird, wobei die zweite Erzeugerwicklung in einer Prüfrichtung hinter der ersten Erzeugerwicklung angeordnet ist, bei dem
- eine Frequenz und eine Wellenlänge einer zu erzeugenden Ultraschallwelle festgelegt werden, mit der der Körper geprüft werden soll,
- durch Anlegen einer Wechselspannung an die erste Erzeugerwicklung eine sich in die Prüfrichtung ausbreitende Ultraschallwelle erzeugt wird und
- an die zweite Erzeugerwicklung eine Wechselspannung angelegt wird, wenn im Hinblick auf die Ausbreitung der durch die erste Erzeugerwicklung erzeugten Ultraschallwelle die durch das Anlegen einer Wechselspannung an die zweite Erzeugerwicklung hervorgerufene Materialbewegung des Körpers die Ausbreitung einer Ultraschallwelle mit der festgelegten Frequenz und der festgelegten Wellenlänge konstruktiv verstärkt.

3. Verfahren nach Anspruch 2, **dadurch gekennzeichnet, daß** der EMAT mindestens eine erste Empfängerwicklung und eine zweite Empfängerwicklung aufweist, wobei die zweite Empfängerwicklung in einer Prüfrichtung hinter der ersten Empfängerwicklung angeordnet ist,
**dadurch gekennzeichnet,**
- **daß** mit der ersten Empfängerwicklung ein erstes Messsignal erzeugt wird und
- **daß** mit der zweiten Empfängerwicklung ein zweites Messsignal erzeugt wird und
- **daß** zur Erzeugung eines Ausgangsmeßsignal das erste Messsignal durch ein Halteglied um eine Haltezeit verzögert wird und zu dem zweitem Messsignal addiert wird, wobei die Haltezeit der Laufzeit der Ultraschallwelle entspricht, wie sie sich aus der durch die festgelegte Frequenz und Wellenlänge ergebenden Ausbreitungsgeschwindigkeit und dem Abstand der ersten Empfängerwicklung zur zweiten Empfängerwicklung ergibt.

4. Verfahren zur Prüfung eines elektrisch leitfähigen Körpers, insbesondere nach Anspruch 1, bei dem ein EMAT eingesetzt wird, der mindestens eine erste Empfängerwicklung und eine zweite Empfängerwicklung aufweist, wobei die zweite Empfängerwicklung in einer Prüfrichtung hinter der ersten Empfängerwicklung angeordnet ist,
bei dem,
- ein eine Frequenz und eine Wellenlänge einer zu erzeugenden Ultraschallwelle festgelegt werden, mit der der Körper geprüft werden soll,
- die Ultraschallwelle mit der festgelegten Frequenz und der festgelegten Wellenlänge erzeugt wird,
- mit der ersten Empfängerwicklung ein erstes Messsignal erzeugt wird und
- mit der zweiten Empfängerwicklung ein zweites Messsignal erzeugt wird und
- zur Erzeugung eines Ausgangsmeßsignal das erste Messsignal durch ein Halteglied um eine Haltezeit verzögert wird und zu dem zweitem Messsignal addiert wird, wobei die Haltezeit der Laufzeit der Ultraschallwelle entspricht, wie sie sich aus der durch die festgelegte Frequenz und Wellenlänge ergebenden Ausbreitungsgeschwindigkeit und dem Abstand der ersten Empfängerwicklung zur zweiten Empfängerwicklung ergibt.

5. Verfahren nach einem der Ansprüche 2 bis 4, **dadurch gekennzeichnet, daß** nach der Prüfung mit einer Ultraschallwelle mit einer ersten festgelegten Frequenz und einer ersten festgelegten Wellenlänge eine zweite Frequenz und eine zweite Wellenlänge einer zu erzeugenden zweiter Ultraschallwelle festgelegt werden, mit der der Körper geprüft werden soll, und
- daß durch Anlegen einer Wechselspannung an die erste Erzeugerwicklung eine sich in die Prüfrichtung ausbreitende Ultraschallwelle erzeugt wird und
- daß an die zweite Erzeugerwicklung eine Wechselspannung angelegt wird, wenn im Hinblick auf die Ausbreitung der durch die erste Erzeugerwicklung erzeugte Ultraschallwelle die durch das Anlegen einer Wechselspannung an die zweite Erzeugerwicklung hervorgerufene Materialbewegung des Körpers die Ausbreitung eine Ultraschallwelle mit der festgelegten zweiten Frequenz und der festgelegten zweiten Wellenlänge des gewählten zweiten Mode konstruktivverstärkt,
und/oder
- daß mit der ersten Empfängerwicklung ein erstes Messsignal erzeugt wird und
- daß mit der zweiten Empfängerwicklung ein zweites Messsignal erzeugt wird und
- daß zur Erzeugung eines Ausgangsmeßsignal das erste Messsignal durch ein Halteglied um eine Haltezeit verzögert wird und zu dem zweitem Messsignal addiert wird, wobei die Haltezeit der der festgelegten Frequenz und Wellenlänge entsprechenden Laufzeit der Ultraschallwelle von der ersten Empfängerwicklung zur zweiten Empfängerwicklung entspricht.

6. Verfahren nach einem der Ansprüche 1 bis 5, **dadurch gekennzeichnet, daß** der zu prüfende Körper zwei Enden aufweist und zur Prüfung des Körpers der EMAT zunächst das eine Ende des zu prüfenden Körpers umfassend gehalten wird und den Körper prüft und dann der EMAT das zweite Ende des zu prüfenden Körpers umfassend gehalten wird und die Prüfung des Körpers fortgesetzt wird.

7. Verfahren nach einem der Ansprüche 2 bis 6, **dadurch gekennzeichnet, daß** für die zu erzeugende Ultraschallwelle eine Kombination aus Frequenz und Wellenlänge gewählt wird, bei der im Dispersionsdiagramm des zu prüfenden Körpers die Funktion der Gruppengeschwindigkeit eines Mode ein Maximum aufweist.

8. Vorrichtung zur Prüfung eines elektrisch leitfähigen Körpers mit einem Prüfkopf, der einen EMAT mit mindestens einer ersten Erzeugerwicklung und einer zweiten Erzeugerwicklung aufweist, wobei die zweite Erzeugerwicklung in einer Prüfrichtung hinter der ersten Erzeugerwicklung angeordnet ist,
bei der
- eine Erzeugerwicklung zur Erzeugung einer Ultraschallwelle eines Longitudinal-Mode von einem Wicklungsanfang zu einem Wicklungsende derart um eine Durchgangsöffnung, in die der zu prüfende Körper eingebracht werden kann, gewickelt ist, daß sich die Erzeugerwicklung im wesentlichen in einer Ebene befindet, die in einem Winkel von 90° zur Prüfrichtung steht und
- eine weitere Erzeugerwicklung zur Erzeugung einer Ultraschallwelle eines Longitudinal-Mode von einem Wicklungsanfang zu einem Wicklungsende derart um die Durchgangsöffnung gewickelt ist, daß sich die Erzeugerwicklung im wesentlichen in einer weiteren Ebene befindet, die in einem Winkel von größer 90° zur Prüfrichtung steht und die beiden Ebenen zueinander beabstandet sind,
und/oder bei der
- eine Erzeugerwicklung zur Erzeugung einer Ultraschallwelle eines Torsions-Mode von einem Wicklungsanfang zu einem Wicklungsende derart geführt wird, daß sich ein erster Teilabschnitt der Erzeugerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Erzeugerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle und
- eine weitere Erzeugerwicklung zur Erzeugung einer Ultraschallwelle eines Torsions-Mode von einem Wicklungsanfang zu einem Wicklungsende derart geführt wird, daß sich ein erster Teilabschnitt der Erzeugerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Erzeugerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle.

9. Vorrichtung nach Anspruch 8, **dadurch gekennzeichnet, daß** der EMAT eine erste Empfängerwicklung und eine zweite Empfängerwicklung aufweist, wobei die zweite Empfängerwicklung in einer Prüfrichtung hinter der ersten Empfängerwicklung angeordnet ist,
bei der
- eine Empfängerwicklung von einem Wicklungsanfang zu einem Wicklungsende derart um die Durchgangsöffnung gewickelt ist, daß sich die Empfängerwicklung im wesentlichen in einer Ebene befindet, die in einem Winkel von 90° zur Prüfrichtung steht und
- eine weitere Empfängerwicklung von einem Wicklungsanfang zu einem Wicklungsende derart um die Durchgangsöffnung gewickelt ist, daß sich die Empfängerwicklung im wesentlichen in einer weiteren Ebene befindet, die in einem Winkel von 90° zur Prüfrichtung steht und die beiden Ebenen zueinander beabstandet sind,
und/oder bei der
- eine Empfängerwicklung von einem Wicklungsanfang zu einem Wicklungsende derart geführt wird, daß sich ein erster Teilabschnitt der Empfängerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Empfängerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle und
- eine weitere Empfängerwicklung von einem Wicklungsanfang zu einem Wicklungsende derart geführt wird, daß sich ein erster Teilabschnitt der Empfängerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Empfängerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle.

10. Vorrichtung zur Prüfung eines elektrisch leitfähigen Körpers mit einem Prüfkopf, der einen EMAT aufweist, der eine erste Empfängerwicklung und eine zweite Empfängerwicklung aufweist, wobei die zweite Empfängerwicklung in einer Prüfrichtung hinter der ersten Empfängerwicklung angeordnet ist,
bei der
- eine Empfängerwicklung von einem Wicklungsanfang zu einem Wicklungsende derart um eine Durchgangsöffnung, in die der zu prüfende Körper eingebracht werden kann, gewickelt ist, daß sich die Empfängerwicklung im wesentlichen in einer Ebene befindet, die in einem Winkel von 90° zur Prüfrichtung steht und
- eine weitere Empfängerwicklung von einem Wicklungsanfang zu einem Wicklungsende derart um die Durchgangsöffnung gewickelt ist, daß sich die Empfängerwicklung im wesentlichen in einer weiteren Ebene befindet, die in einem Winkel von 90° zur Prüfrichtung steht und die beiden Ebenen zueinander beabstandet sind,
und/oder bei der
- eine Empfängerwicklung von einem Wicklungsanfang zu einem Wicklungsende derart geführt wird, daß sich ein erster Teilabschnitt der Empfängerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Empfängerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle und
- eine weitere Empfängerwicklung von einem Wicklungsanfang zu einem Wicklungsende derart geführt wird, daß sich ein erster Teilabschnitt der Empfängerwicklung in eine Richtung erstreckt, die der Prüfrichtung entspricht, wobei der erste Teilabschnitt kürzer ist, als die Hälfte der Wellenlänge der zu erzeugenden Ultraschallwelle, und ein weiterer Teilabschnitt der Empfängerwicklung sich in eine Richtung erstreckt, die der Prüfrichtung entgegen gerichtet ist, wobei der weitere Teilabschnitt kürzer ist, als die Hälfte der Wellenlänge der zu erzeugenden Ultraschallwelle.

11. Vorrichtung nach einem der Ansprüche 8 bis 10, **dadurch gekennzeichnet, daß** die Erzeugerwicklung, bzw. Empfängerwicklung, die von einem Wicklungsanfang zu einem Wicklungsende um die Durchgangsöffnung gewickelt ist und sich im wesentlichen in einer Ebene befindet, eine Breite in Richtung senkrecht zur Ebene von maximal 1 mm aufweist.

12. Verwendung des Verfahrens nach einem der Ansprüche 1 bis 7 und/oder der Vorrichtung nach einem der Ansprüche 8 bis 11 zur Prüfung eines stab- und/oder plattenförmigen Körpers.
